Europäisches Patentamt

European Patent Office

Office européen des brevets

(19)

(11) **EP 0 681 695 B1**

(12) **EUROPEAN PATENT SPECIFICATION**

(45) Date of publication and mention
of the grant of the patent:
**02.05.1997 Bulletin 1997/18**

(51) Int Cl.$^6$: **G01N 21/64**, G02B 21/00,
G01N 21/25

(21) Application number: **94906355.6**

(22) Date of filing: **01.02.1994**

(86) International application number:
**PCT/IB94/00019**

(87) International publication number:
**WO 94/18547 (18.08.1994 Gazette 1994/19)**

(54) **APPARATUS FOR QUANTITATIVE IMAGING OF MULTIPLE FLUOROPHORES**

VORRICHTUNG ZUR QUANTITATIVEN ABBILDUNG VON MEHREREN FLUOROPHOREN

APPAREIL D'IMAGERIE QUANTITATIVE DE FLUOROGENES MULTIPLES

(84) Designated Contracting States:
**AT CH DE DK FR GB IT LI NL SE**

(30) Priority: **01.02.1993 US 11881**
**31.01.1994 US 189190**

(43) Date of publication of application:
**15.11.1995 Bulletin 1995/46**

(73) Proprietors:
• **Aslund, Nils R., D.**
**S-120 53 Arsta (SE)**
• **Carlsson, Kjell S.**
**S-186 42 Vallentuna (SE)**

(72) Inventors:
• **Aslund, Nils R., D.**
**S-120 53 Arsta (SE)**
• **Carlsson, Kjell S.**
**S-186 42 Vallentuna (SE)**

(74) Representative: **Kahler, Kurt, Dipl.-Ing. et al**
**Patentanwälte**
**Kahler, Käck, Fiener et col.,**
**Vorderer Anger 268**
**86899 Landsberg/Lech (DE)**

(56) References cited:
**WO-A-92/13265** **US-A- 5 208 651**

• **LASER FOCUS WORLD, vol.28, no.5, May 1992,
TULSA US pages 60 - 80 J.R.LAKOWICZ
'Fluorescence lifetime sensing'**
• **PROCEEDINGS SPIE:TIME-RESOLVED LASER
SPECTROSCOPY IN BIOCHEMISTRY II,
vol.1204, January 1990, WASHINGTON,US
pages 798 - 807 C.G.MORGAN ET AL.
'Fluorescence decay time imaging using an
Imaging Photon Detector with a radiofrequency
photon correlation system'**
• **TRAC, TRENDS IN ANALYTICAL CHEMISTRY,
vol.5, no.10, December 1986, CAMBRIDGE GB
pages 257 - 263 J.R.LAKOWICZ
'Frequency-domain fluorescence spectroscopy,
a new method for the resolution of complex
fluorescence emission'**

## Description

Field of the Invention

This invention relates to quantitative microfluorometry and more particularly to a device for quantitative microfluorometry in which fluorophores are quantified by simultaneous excitation at two or more wavelengths.

Background Art

Recent development of fluorescent indicator dyes for biologically important intracellular components has made it possible to follow the time-dependent distribution of these components in intact cells. For example, see U.S. Pat. Nos. 5,049,673, 4,849,362 and 4,603,208.

The emitted fluorescent radiation from a fluorophore in response to excitation of a single wavelength generally includes a broad band of wavelengths. Spectra of emissions from different fluorophores will generally overlap. Also, when using radiations of different wavelengths to excite each of two fluorophores, their emission spectra may still overlap.

Fluorophores absorb excitation radiation at more than one wavelength. The absorption spectra of different fluorophores may overlap. As a consequence, radiation of a wavelength chosen to efficiently excite a certain fluorophore will also to some extent excite other fluorophores. There may occur spectral overlappings between these cross-excited emission spectra of other fluorophores and the emission spectrum of the fluorophore predominantly excited by the chosen wavelength. In summary, in many applications involving multiple fluorophores, the fact that their emission spectra generally overlap and that their absorption spectra also may overlap constitutes a major problem.

Making simultaneous quantitative measurements of the individual fluorophores is difficult or impossible. Therefore, in the past, simultaneous fluorescent detection has been primarily limited to cases where the wavelength regions of spectral overlap of the emissions can be suppressed by optical filtering. Then separation is achieved at the expense of losing valuable signal intensity.

The different emission spectra of a single fluorophore obtained by exciting it with different wavelengths generally overlap heavily and can not be separated by optical filtering. The relative intensities of these spectra depend on the shape of the absorption spectrum. This shape may convey valuable information about the fluorophore and its environment. Thus, there is a need to separately measure the cross-excited emission of a fluorophore and the main emission, thereby collecting information about the shape of the absorption spectrum. To achieve this in the case when two different fluorophores are present and two excitation wavelengths are simultaneously applied, the individual contributions from each fluorophore must be measured separately. This can not be done by optical filtering exclusively.

When a fluorophore is excited by light having a sinusoidally modulated intensity, the fluorescence emitted is also sinusoidally modulated. The modulation frequencies are the same but the phase of the emitted fluorescence is shifted by an amount related to the lifetime of the fluorophore's excited state. U.S. Pat. No. 4,937,457 to Mitchell discloses a frequency domain spectrofluorometer which uses a single wavelength of excitation modulated at multiple harmonically related phase-locked frequencies to simultaneously determine the spectral response and phase shift of a single fluorophore to the entire range of modulation frequencies employed. The data produced is used to determine the fluorescence lifetime of a fluorophore.

In U.S. Pat. No. 5,032,714 to Takahashi et al., a light waveform measuring device is used for measuring the lifetime of fluorescent light produced due to pulsed laser excitation. Two laser beams of different frequencies, at least one of which is pulsed, are used to produce a single-frequency pulsed beam selected from the sum frequency mixing of the beams. The output beam is pulsed at the same rate as the pulsed input beam which is used to trigger a single-photon detector or streak camera. The detector is thereby synchronized to the exciting beam.

Identification and discrimination of multiple fluorophores in a sample is disclosed in U.S. Pat. No. 5,047,321 to Loken et al. Each component must have a distinguishable characteristic peak emission wavelength at which a detector is set. Fluorophores may be excited with a single wavelength or multiple wavelengths, but detection occurs in regions where the peak emission spectra do not overlap.

In U.S. Pat. No. 4,628,026 to Gardell et al., an automated system for the sequential and alternate irradiation of a specimen by two distinguishable wavelengths of light is disclosed. The system classifies specimens based on the quotient of the fluorescent light intensities sequentially received from the specimen in response to the two excitation wavelengths.

Simultaneous recording of multiple fluorophores excited by a single wavelength using spectral filtering or separation is disclosed in U.S. Pat. No. 4,833,332 to Robertson, Jr. et al. The fluorophores which have overlapping emission spectra are distinguished by the ratio of their emissions transmitted by two spectral filters having complementary transmission spectra. The system is not capable of quantitative determinations.

The prior art devices which measure fluorescence at only one peak emission wavelength are unable to simultaneously quantify multiple fluorophores using the total emission from each fluorophore. Those devices which rely on spectral separation to distinguish multiple fluorophores are unable to separate the total contribution of each fluorophore from the combined emission spectrum detected.

Use of lock-in amplifiers for signal detection is known. Using a two-phase, rather than a single-phase lock-in amplifier, the value of the phase angle can be derived from the outputs of the in-phase and the quadrature channels of the amplifier. This has been used, for example, in cytometry by Steinkamp and Crissman (1992) to distinguish between fluorophores that have different decay times. It has also been proposed by Morgan et al. (1992) that this technique should be used in a confocal scanning microscope to produce images that represent the decay time measured at each picture point. A non-confocal system that records the decay times in all picture elements simultaneously has been implemented by Lakowicz and Berndt (1991). In a system reported by Kurtz (1987) for studying objects in a continually flowing solution, a single fluorophore is excited using two modulated excitation wavelengths. Two lock-in amplifiers are used in the system, which performs measurements at a single point and produces no images.

Another method to distinguish between fluorophores with different decay times is to use a repetitive source of short optical pulses and employ time-correlated single-photon counting. This technique has also been combined with imaging. A non-confocal system of this kind has been implemented by Morgan and Murray (1991). A confocal system using time gating has been implemented by Buurman et al. (1992).

The term fluorescence lifetime imaging (FLIM) is used for techniques that represent a combination of decay time measurements and imaging, see Lakowicz and Berndt, (1991). Also, PCT international application W092/13265 by Lakowicz and Berndt discloses a method and apparatus for detection and measurement of physical characteristics of a sample based on multi-dimensional phase-modulation FLIM. At least one fluorescent probe having a known or variable lifetime is excited by an intensity-modulated beam and a gating signal is used to intensify emitted secondary light.

It is an object to provide an improved microfluorometer capable of simultaneously quantifying multiple fluorophores with greater efficiency.

It is another object of the present invention to provide an improved microfluorometer which simultaneously utilizes the entire emissions of multiple fluorophores or the entire emission spectra except possibly for minor parts.

It is a further object to provide an improved microfluorometer capable of separating the individual contributions from fluorophores having overlapping absorption spectra from the combined emission spectrum detected.

Summary of the Invention

The above objects have been achieved in a microfluorometer which simultaneously excites a plurality of fluorescent targets at a single location with two or more wavelengths. In the preferred embodiment, each excitation wavelength is chosen to predominantly excite one of the fluorophores. The intensity of the excitation at each wavelength is time-modulated at a separate frequency.

In the first embodiment, the radiation emitted in response to the combined excitation is separated into spectral parts representing different wavelength bands. Optical filtering and optical beam splitting is employed to achieve this separation. Dual detectors are used to detect the separated spectral parts of the combined emission. A frequency-locked amplifier synchronized to a corresponding modulation frequency is attached to each detector. The discrimination performed by the frequency-locked amplifiers, in combination with the separation into spectral parts performed by optical filters and a beam splitter, allows extraction and measuring of contributions representing each separate fluorophore exclusively. This is achieved despite the fact that the emission spectra of the fluorophores may overlap heavily and despite the possible presence of cross-excited spectra, which arise when the wavelength that predominantly excites a certain fluorophore also to some extent excites another fluorophore.

In a variation of the first embodiment, two single-phase lock-in amplifiers are attached to each detector. The two amplifiers are synchronized with different frequencies, viz. the frequencies used to modulate the intensity of the excitation at each of two excitation wavelengths. All the individual components of the composed emission, including cross-excited contributions, are extracted and measured.

In still another variation of the first embodiment, two single-phase amplifiers attached to each detector are used, the two amplifiers being tuned to the same frequency. The two amplifiers attached to the one detector are both tuned to the frequency used to modulate the intensity of the excitation at the one excitation wavelength; the two amplifiers attached to the other detector are both tuned to the frequency used to modulate the intensity of the excitation at the other excitation wavelength. The phase positions of the two amplifiers attached to each detector are 90° apart. Together the two amplifiers perform the function of a dual-phase lock-in amplifier encompassing an in-line and a quadrature channel.

The two outputs from each dual-phase amplifier are processed to obtain the magnitude and the phase angle of the signal applied to the amplifier, employing well-known techniques. Preferably this is performed digitally, by a data processing unit attached to the outputs. As a result the amplitude of the modulated signal received by the detector, and a phase angle, are derived.

The phase angle represents, in a relative scale, the shift between the phase angle of the modulated excitation and the phase angle of the detected emission. If the molecular relaxation time of a fluorophore changes, as it may do, e. g., due to a change of the pH-value of the environment of the fluorophore, this phase shift will change. The effect is substantial if the modulation frequency is high. Therefore, in the present variation of the first embodiment, the modulation frequency used is preferably an order of magnitude higher than in the previously described variations. The device, according to the described variation supplies, simultaneously and independently, the phase shifts for two different fluorophores.

In all embodiments, confocal scanning optics may be used for pixel-by-pixel scanning of a stack of planes, so that volumetric data may be obtained, simultaneously and independently, from different fluorophores. Data may be stored in a computer and later displayed. Different colors may be used to distinguish regions representing different intensities of a fluorophore or, in one of the variations of the first embodiment, different decay times of a fluorophore. In the latter case, a FLIM image is obtained. Alternatively, colors may be used to distinguish contributions from different fluorophores. A three-dimensional image of the volume may be re-created and closely inspected using image-processing techniques, such as generating projections from different angles, zooming etc.

In the second embodiment of the present invention, a single detector is used. This embodiment has relevance in cases where the relative changes in relaxation times are negligible. A separate lock-in amplifier is synchronized to the modulation frequency of each excitation wavelength. In one variation of the second embodiment, dual phase lock-in amplifiers are used with the in-phase channel tuned to a phase position near to that of the fluorophore predominantly excited by that wavelength. Using the in-phase and quadrature outputs of each amplifier, all components of the combined emission spectrum may be separated.

The phase angles of the emission spectra are constants, since the relaxation times do not change, and are determined from data obtained in regions where only one of the fluorophores is present. These regions may be identified by direct observation or by analysis of the data set from the entire specimen. The described variation of the second embodiment is thus identical to a variation of the first embodiment where two single-phase amplifiers are attached to each detector and the two amplifiers attached to each detector are both tuned to the same frequency.

In another variation of the second embodiment, a single phase lock-in amplifier is used for each excitation wavelength. The phase position of the amplifier is tuned to the position that gives a maximum output value for the fluorescence emitted by the predominantly excited fluorophore. Using single phase amplifiers, the emission spectra corresponding to each predominantly excited fluorophore may be discriminated.

An advantage of the microfluorometer is that multiple fluorophores are simultaneously and independently quantified with greater efficiency.

Another advantage is that contributions from different fluorophores are measured with negligible loss of information, despite their emission spectra overlap and despite interference from cross-excited spectra.

Another advantage is that all the contributions from each fluorophore, including cross-excited spectra, may be simultaneously measured.

A further advantage is that fluorescent lifetime images from different fluorophores are simultaneously recorded.

Brief Description of the Drawings

Fig. 1 is a schematic block diagram of a dual detector quantitative microfluorometer in accordance with our invention.

Figs. 2a-d are plots showing the individual spectral components of a combined emission spectrum.

Fig. 3 is a schematic block diagram of a first variation of the device of Fig. 1 featuring dual lock-in amplifiers for each detector.

Fig. 4 is a schematic block diagram of a second variation of the device of Fig. 1 featuring dual lock-in amplifiers for each detector configured for phase discrimination as well as frequency discrimination.

Fig. 5 is a schematic block diagram of a single detector quantitative microfluorometer in accordance with the present invention.

Figs. 6a-d are plots showing the individual spectral components of a combined emission spectrum.

Figs. 7a-b are a diagrammatic representation of the phase relation between the modulated excitation wavelength and the modulated fluorescent emissions from two fluorophores for each of the lock-in amplifiers.

Fig. 8 is a vector diagram of the phase angles of the components of the output of dual phase lock-in amplifier 1.

Fig. 9 is a vector diagram showing the phase relationship of the components of the output of dual phase lock-in amplifier 2.

Fig. 10 is a schematic block diagram of a variation of the second embodiment of the present invention using single phase lock-in amplifiers.

Detailed Description of the Preferred Embodiments

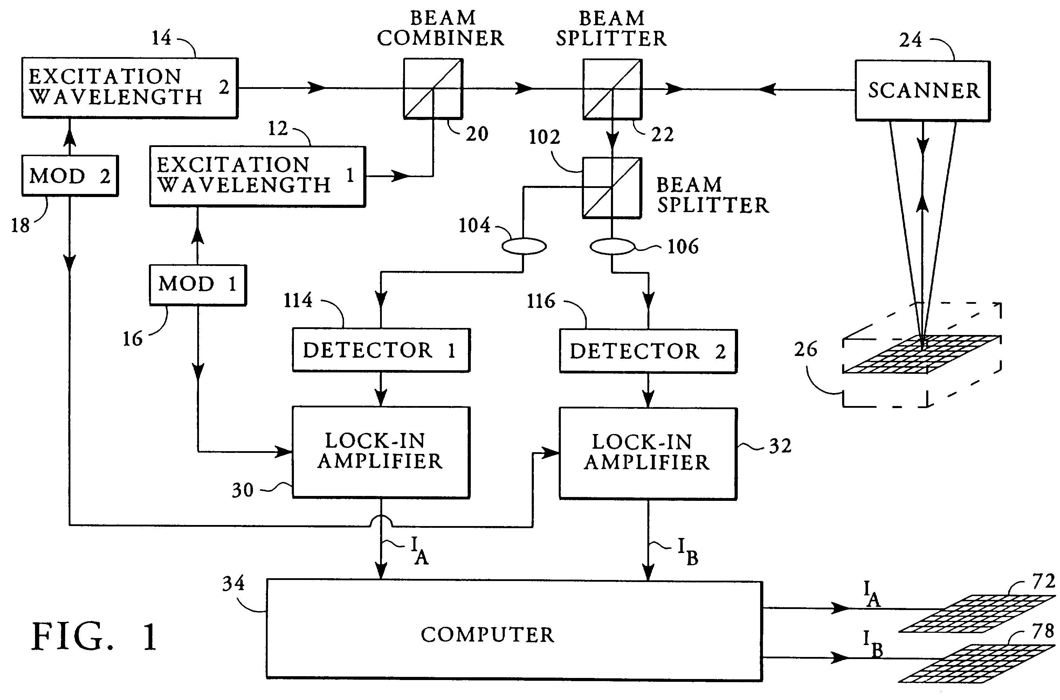

With reference to Fig. 1, a schematic block diagram of the first embodiment of the quantitative microfluorometer employing two excitation wavelengths, two detectors and two lock-in amplifiers is shown. Monochromatic excitation light of different wavelengths is supplied by a pair of light sources 12 and 14. In the preferred embodiment, light sources 12 and 14 are separate diode lasers, although any source of electromagnetic radiation capable of being time-modulated in intensity may be used. The intensity of light source 12 is controlled by a modulator 16 operating at a sinusoidal frequency $v_1$. In similar fashion, light source 14 is controlled by a second modulator 18 operating at frequency $v_2$. In preferred embodiments, the combination of light source 12 and modulator 16 may alternatively be implemented by a continuous gas laser, followed by an electro-optical or an acousto-optical modulator operating at a frequency $v_1$. Like-wisely, the combination of light source 14 and modulator 18 may be implemented by a continuous gas laser, followed by an electro-optical or acousto-optical modulator operating at a frequency $v_2$. In preferred embodiments, these modulators should be capable of operating at frequencies up to 50 Mhz to cover phase shift measurements according to one of the preferred embodiments. Realistic values of the modulation frequencies in the other embodiments are 2.2 and 3.0 Mhz. Individual light beams from light sources 12 and 14 are combined in a beam combiner 20. The combined beam passes through a beamsplitter 22, which transmits light at the excitation wavelengths $\lambda_1$ and $\lambda_2$. A scanner 24 sequentially directs the combined beam to locations at sample 26. A realistic value of the sampling frequency of the scanner is 100 khz. In the preferred embodiment, scanner 24 is a confocal laser microscope, although any device capable of focusing excitation at, and collecting emitted radiation from, a discrete location in sample 26 may be used. Sample 26 may be any light-transmitting object containing multiple fluorophores. Such objects include biological cells and two dimensional gels used for separating compounds or dish cultures and the like.

The combined fluorescence emitted in response to excitation at the focal point of scanner 24 is collected by scanner 24 and directed to beamsplitter 22, which has a dichroic element, then passed through another beamsplitter 102, which deflects emitted fluorescence to the two detectors 114 and 116. Detectors 114 and 116 may each be any device which produces a signal in response to the photons emitted by the fluorophores. Photomultipliers which convert photons into electrical signals are examples of such devices. The semi-reflecting element of the beamsplitter 102 may be a dichroic mirror, performing both beamsplitting and spectral separation. In addition optical filters 104 and 106 may be employed. The effect of the optical filtering performed either by a dichroic element included in beamsplitter 102 or by optical filters 104 and 106, or jointly by these elements, is to separate the collected light into two parts representing different wavelength bands. These parts are distributed to detectors 114 and 116, respectively. Detectors 114 and 116 may be any detectors which produce an electrical signal in response to photons emitted by the fluorophores. Photomultipliers, which convert photons into electrical signals, are examples of such devices. The signals produced by detectors 114 and 116 are sent to a pair of lock-in amplifiers 30 and 32. Lock-in amplifier 30 is synchronized with the modulation frequency $v_1$ imposed on light source 12 by modulator 16. Similarly, lock-in amplifier 32 is synchronized with the mod-ulation frequency $v_2$ imposed on light source 14 by modulator 18. The phase position of each lock-in amplifier is adjusted to maximize the output.

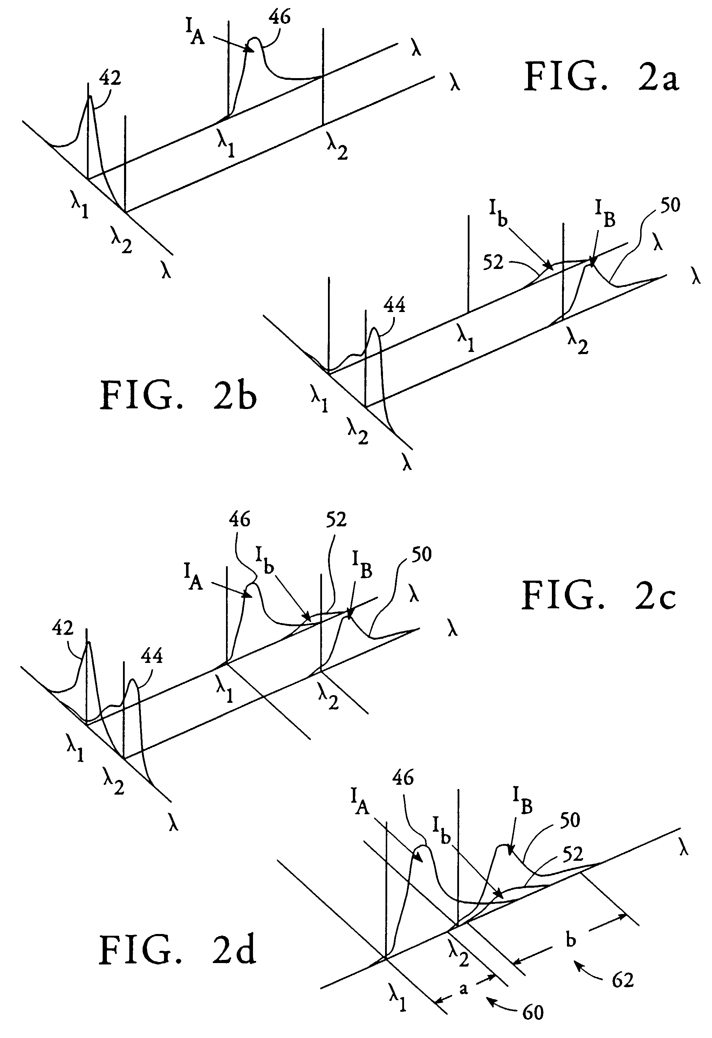

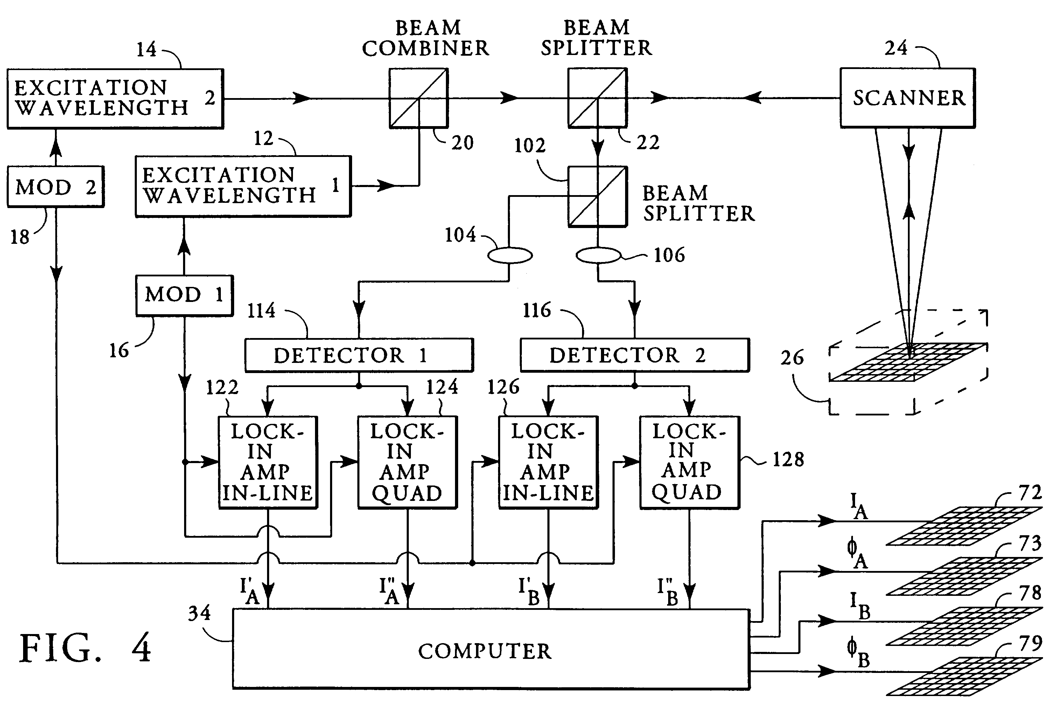

Referring to Figs. 2a-d, the curves show the individual spectral components of a combined emission spectrum emitted by two fluorophores in response to excitation by two wavelengths. The curves approximately describe the spectra of two commonly used fluorophores, TRITC (tetramethyl rhodamine isothiocyanate) (fluorophore A) and Lucifer Yellow (fluorophore B). $\lambda_1$ and $\lambda_2$ are selected by examining the absorption spectra 42 and 44 of fluorophores A and B respectively. $\lambda_1$ is chosen to predominantly excite fluorophore A, while $\lambda_2$ is chosen to predominantly excite fluorophore B. Fluorophore A produces a fluorescent emission spectrum 46 ($I_A$) in response to $\lambda_1$. Fluorophore B produces a fluorescent emission spectrum 50 ($I_B$) in response to $\lambda_2$ and a smaller fluorescent emission spectrum 52 ($I_b$) in response to $\lambda_1$. This latter cross-excited spectrum results from the fact that absorption spectra 42 and 44 overlap at the wavelength $\lambda_1$. The combined emission spectrum, in response to excitation by $\lambda_1$ and $\lambda_2$, is composed of the superimposed spectra 46 ($I_A$), 50 ($I_B$) and 52 ($I_b$), as indicated by Fig. 4d.

The contribution 50 ($I_B$) is the only of the three emissions that is modulated with the frequency $v_2$. The wavelength band 62 (b) deflected to detector 116 (detector 2) is chosen so as to encompass the major part of the spectral range of contribution 50 ($I_B$). The measured value of the contribution $I_B$, thus separated from any other contributions to the total emission, is then obtained from the output of lock-in amplifier 32.

The contributions 46 ($I_A$) and 52 ($I_b$) are both modulated with frequency $v_1$. The wavelength band 60 (a) deflected to detector 114 (detector 1) is chosen so as to exclude the spectral range of contribution 52 ($I_b$) but to encompass the major part of contribution 46 ($I_A$). The measured value of the contribution $I_A$, thus separated from any other contributions to the total emission, is then obtained as an output from lock-in amplifier 30.

The outputs from lock-in amplifiers 30 and 32 are sent to a computer 34. In the preferred embodiments, computer 34 is a digital computer and the outputs from amplifiers 30 and 32 are digitized, before storage, by conventional analog to digital converters. The inputs representing contributions $I_A$ and $I_B$ at discrete locations in sample 26 are stored in a location specific manner in the computer 34 and can be displayed as digital images on a screen. An image representing fluorophore A or an image representing fluorophore B can be displayed separately. Alternatively, an image representing the two fluorophores can be displayed simultaneously, e.g., using colors to distinguish them from each other. Computer 34 may also derive projection images of a stack of recorded images representing a three-dimensional transparent volume, such as a cell, marked by two different fluorophores, and display such projection images in a similar fashion on a screen. In Fig. 1, stored data representing measured values of $I_A$ and $I_B$ are mapped into digital images 72 and 78 for visualization.

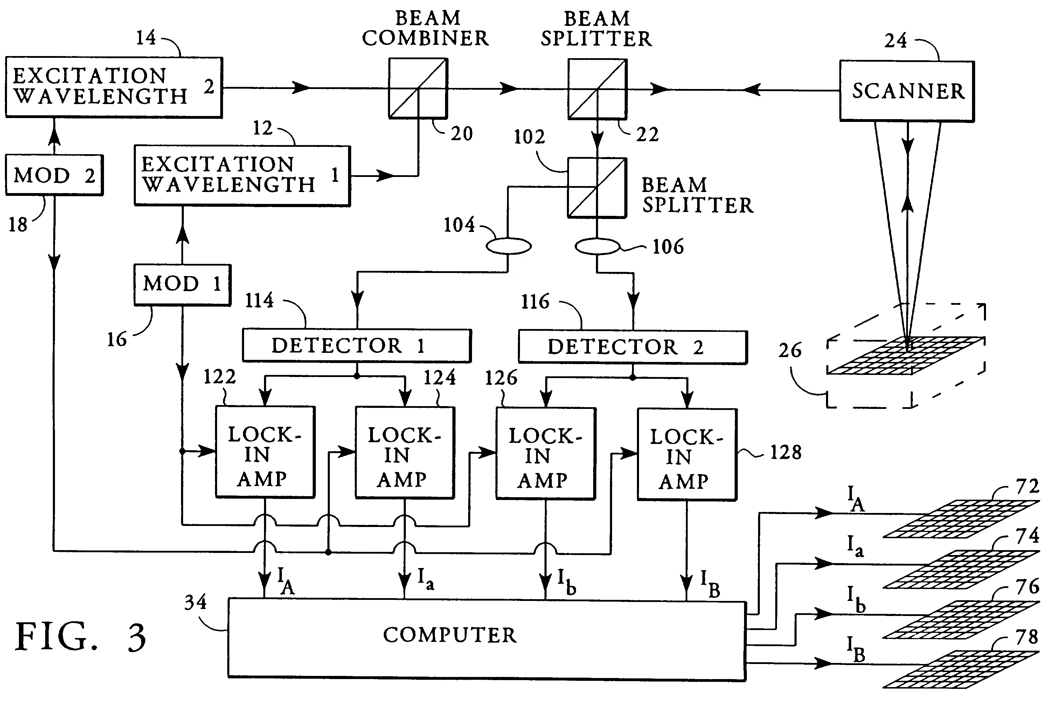

With reference to Fig. 3, two lock-in amplifiers 122 and 124 have been provided for detector 114 (detector 1), and two lock-in amplifiers 126 and 128 for detector 116 (detector 2). Lock-in amplifiers 122 and 126 are locked to modulator 16 (modulator 1), and lock-in amplifiers 124 and 128 to modulator 18 (modulator 2). The phase position of each lock-in amplifier is adjusted to maximize the output.

As before, the wavelength band deflected to detector 116 (detector 2) is chosen so as to encompass the major part of the spectral range of contribution 50 ($I_B$). It will also encompass major parts of the cross-excited contribution 52 ($I_b$). The contribution 50 ($I_B$) is modulated with frequency $\nu_2$, whereas contribution 52 ($I_b$) is modulated with frequency $\nu_1$. Lock-in amplifier 126 is locked to frequency $\nu_1$ and lock-in amplifier 128 to frequency $\nu_2$. The measured value of the contribution 50 ($I_B$) is then obtained as an output from lock-in amplifier 128, separated from any of the other contributions, i.e., separated from contribution 52 ($I_b$) and from contribution 46 ($I_A$), which are both modulated with frequency $\nu_1$. Likewisely, the measured value of the contribution 52 ($I_b$) is obtained as an output from lock-in amplifier 126, separated from contribution 50 ($I_B$), which is modulated with the frequency $\nu_2$, and possibly with some interference from contribution 46 ($I_A$), the spectral range of which lies essentially in the wavelength band deflected to detector 114 (detector 1). If this interference is not negligible, it can be compensated for, as will be explained below.

The wavelength band deflected to detector 114 (detector 1) is chosen so as to exclude the spectral range of contribution 52 ($I_b$) but to encompass the major part of contribution 46 ($I_A$), modulated with frequency $\nu_1$. The measured value of the contribution 46 ($I_A$) is obtained as an output from lock-in amplifier 122, which is tuned to frequency $\nu_1$, separated from all other a contributions, including contribution 50 ($I_B$), which is modulated with the frequency $\nu_2$.

The measured value of the contribution 46 ($I_A$) does not include the minor part of that contribution which is deflected to detector 116 (detector 2). In cases where this minor part, which by an estimable amount is proportional to the measured part deflected to detector 114 (detector 1), is not negligible, it can be obtained directly as a proportion of the measured part of contribution 46 ($I_A$) obtained from detector 114 (detector 1). Thus, if necessary, measured values from detector 116 (detector 2) can be corrected for the interference from contribution 46 ($I_A$) by subtracting this proportion. This operation is preferably performed by computer 34.

The purpose of lock-in amplifier 124, tuned to frequency $\nu_2$, is to provide an output which is a measured value of a possible contribution $I_a$, representing a cross-excited contribution from fluorophore A excited by wavelength $\lambda_2$. This contribution will occur if absorption spectra 42 and 44 overlap also at wavelength $\lambda_2$. For simplicity, this is not the case in Fig. 4. The main part of the contribution $I_a$, if occurring, is located within the spectral range 60 (a) passed to detector 114.

The outputs from lock-in amplifiers 122, 124, 126 and 128 are sent to a computer 34. The inputs to computer 34 representing contributions $I_A$, $I_a$, $I_b$ and $I_B$, respectively, at discrete locations in sample 26 are stored in a location specific manner in the computer 34 and can be displayed as digital images on a screen. As explained in the description of the previous embodiment, they can be displayed separately or in combinations and in projection images from a volume. In addition, quotient images can be presented, representing $I_a/I_A$ or $I_b/I_B$, conveying information about the shape of the excitation spectra of fluorophores A and B, respectively. In Fig. 3, stored data representing measured values of $I_A$, $I_a$, $I_b$ and $I_B$ are mapped into digital images 72, 74, 76 and 78 for visualization.

A variation of the apparatus of Fig. 3 is shown in Fig. 4, where lock-in amplifiers 122 and 124 are both locked to modulator 16, and lock-in amplifiers 126 and 128 are both locked to modulator 18. The phase position of amplifier 124 is shifted 90° relatively to the phase position of amplifier 122 and the phase position of amplifier 128 is shifted 90° relatively to that of amplifier 126. Together, amplifiers 122 and 124 constitute a two-phase lock-in amplifier with an in-line and a quadrature channel. In the same way, amplifiers 126 and 128 also constitute such an amplifier. The outputs I' and I" of a two-phase lock-in amplifier constitute the x and y components of a vector, which, in polar coordinates, represents the magnitude and the phase angle of the signal applied to the amplifier. The transformation to obtain this magnitude and this phase angle from each two-phase lock-in amplifier is performed by the computer 34.

The phase angle, apart from an off-set that can be eliminated by adjustment of the two-phase lock-in amplifier, represents the phase shift between the waveform of the modulated excitation and the waveform of the detected emission. With modulation frequencies 2.2 and 3.0 Mhz and with fluorophores that are commonly used for labeling, the phase angle shift will be very small, on the order of a few degrees. It will not change substantially from one location of the specimen to another. Therefore, the adjustment of the phase position of a lock-in amplifier to maximize the output is generally quite uncritical. This kind of adjustment has to be performed when using the lock-in amplifiers in the embodiments described earlier. If modulation frequencies are used that are much higher and/or fluorophores are used that have long decay times, substantial phase shifts may appear. This is the case assumed for the present embodiment.

From the outputs of amplifiers 122 and 124, the phase shift $\phi_A$ of fluorophore A is derived by the computer 34, and from the outputs of amplifiers 126 and 128, the phase shift $\phi_B$ of fluorophore B is derived by the computer 34.

The magnitude derived by the computer from the outputs of amplifiers 122 and 124 is the measured value of the emission spectrum $I_A$, isolated from other contributions to the total emission in an identical way as described in the specification of the embodiment according to Fig. 1. Analogously, the magnitude derived by the computer from the outputs of amplifiers 126 and 128 is the measured value of the emission spectrum $I_B$. The phase shift $\phi$ of a fluorophore is directly related to the decay time $\tau$ of the fluorophore according to the relationship $\tan \phi = 2\pi \, \nu \, \tau$ where $\nu$ is the modulation frequency. From the measured phase shift, the decay time can thus be determined. Thus, decay times for each pixel of a scanned image can be calculated and displayed, supplying, in addition to an intensity image of the fluorophore, also a decay time image, alternatively referred to, in the literature, as a "Fluorescence Lifetime Image". This is performed, simultaneously and independently, for two fluorophores, A and B. In Fig. 4, stored data representing measured values of $I_A$, $\phi_A$, $I_B$ and $\phi_B$ are mapped into digital images 72, 73, 78, and 79 for visualization.

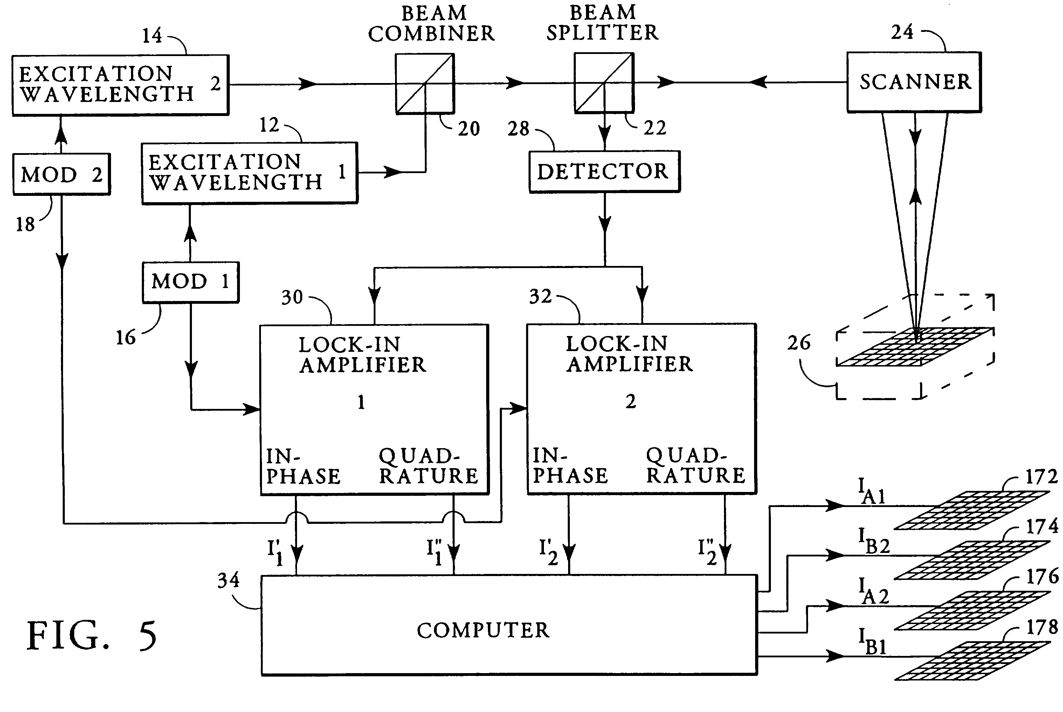

With reference to Fig. 5, a schematic block diagram of the second embodiment of the quantitative microfluorometer employing two excitation wavelengths, a single detector and two dual phase lock-in amplifiers is shown. As in Fig. 1 describing the dual detector embodiments, monochromatic excitation light of different wavelengths is supplied by a pair of light sources 12 and 14. Also as in Fig. 1, the intensity of light source 12 is controlled by a modulator 16 operating at a sinusoidal frequency $\nu_1$, and light source 14 is controlled by a second modulator 18 operating at a separate frequency $\nu_2$. In preferred embodiments, modulators 16 and 18 are electro-optical modulators or acousto-optical modulators operating at frequencies up to 50 Mhz. Any modulator capable of operating at frequencies preferably at least two times greater than the sampling frequency of the microfluorometer may be substituted. In the same manner as in Fig. 1, individual light beams from light sources 12 and 14 are combined in beam combiner 20, the combined beam passes through beamsplitter 22 which transmits light at the excitation wavelengths $\lambda_1$ and $\lambda_2$, and scanner 24 sequentially directs the combined beam to locations within sample 26. The combined fluorescence emitted in response to excitation at the focal point of scanner 24 is collected by scanner 24 and directed to beamsplitter 22.

In Fig. 5 describing the single detector quantitative microfluorometer, however, detector 28 takes the place of detectors 114 and 116 that were used in the dual detector embodiment of Fig. 1. The second beamsplitter 102 is also not used in this embodiment. Detector 28 collects the emitted fluorescence which has been deflected from beamsplitter 22. The signal produced by detector 28 is sent to a pair of lock-in amplifiers 30 and 32. Lock-in amplifier 30 is synchronized with the modulation frequency $\nu_1$ imposed on light source 12 by modulator 16. Similarly lock-in amplifier 32 is synchronized with the modulation frequency $\nu_2$ imposed on light source 14 by modulator 18. In the preferred embodiment, lock-in amplifiers 30 and 32 are dual phase amplifiers producing two outputs which represent amplitudes of the recorded waveform at phase positions that are 90° apart. The outputs from lock-in amplifiers 30 and 32 are sent to a computer 34. Computer 34 stores the inputs corresponding to each discrete location in sample 26 in a location specific manner and mathematically reconstructs the individual spectral components corresponding to the excitation of each fluorophore by each wavelength. As in Fig. 1, in the preferred embodiments, computer 34 is a digital computer and the outputs from amplifiers 30 and 32 are digitized, before storage, by conventional analog to digital converters.

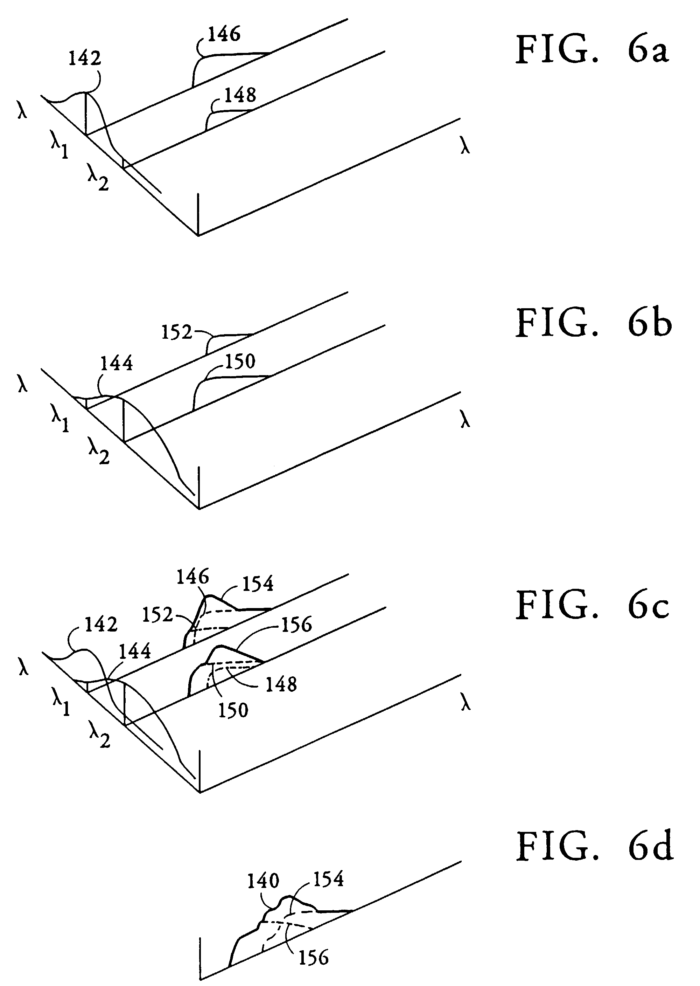

Referring now to Figs. 6a-d, the curves show the individual spectral components of a combined emission spectrum emitted by two fluorophores in response to excitation by two wavelengths. $\lambda_1$ and $\lambda_2$ are selected by examining the absorption spectra 142 and 144 of fluorophores A and B respectively. $\lambda_1$ is chosen to predominantly excite fluorophore A, while $\lambda_2$ is chosen to predominantly excite fluorophore B. Fluorophore A produces a main fluorescent emission spectrum 146 ($I_{A1}$) in response to $\lambda_1$ and a smaller cross-excited fluorescent emission spectrum 148 ($I_{A2}$) in response to $\lambda_2$. This results from the fact that absorption spectra 142 and 144 overlap. Similarly fluorophore B produces a main fluorescent emission spectrum 150 ($I_{B2}$) in response to $\lambda_2$ and a smaller cross-excited fluorescent emission spectrum 152 ($I_{B1}$) in response to $\lambda_1$. Excitation at wavelength $\lambda_1$ produces a combined response 154, which is the sum of fluorophore A main response 146 and fluorophore B cross-excited response 152 ($I_{A1} + I_{B1}$). Similarly, excitation at wavelength $\lambda_2$ produces a combined response 156 consisting of fluorophore B main response 150 and fluorophore A cross-excited response 148 ($I_{B2} + I_{A2}$). A combined emission spectrum 140, in response to excitation by $\lambda_1$ and $\lambda_2$, is composed of the sum of emission spectra 146, 148, 152 and 150 ($I_{A1} + I_{A2} + I_{B1} + I_{B2}$).

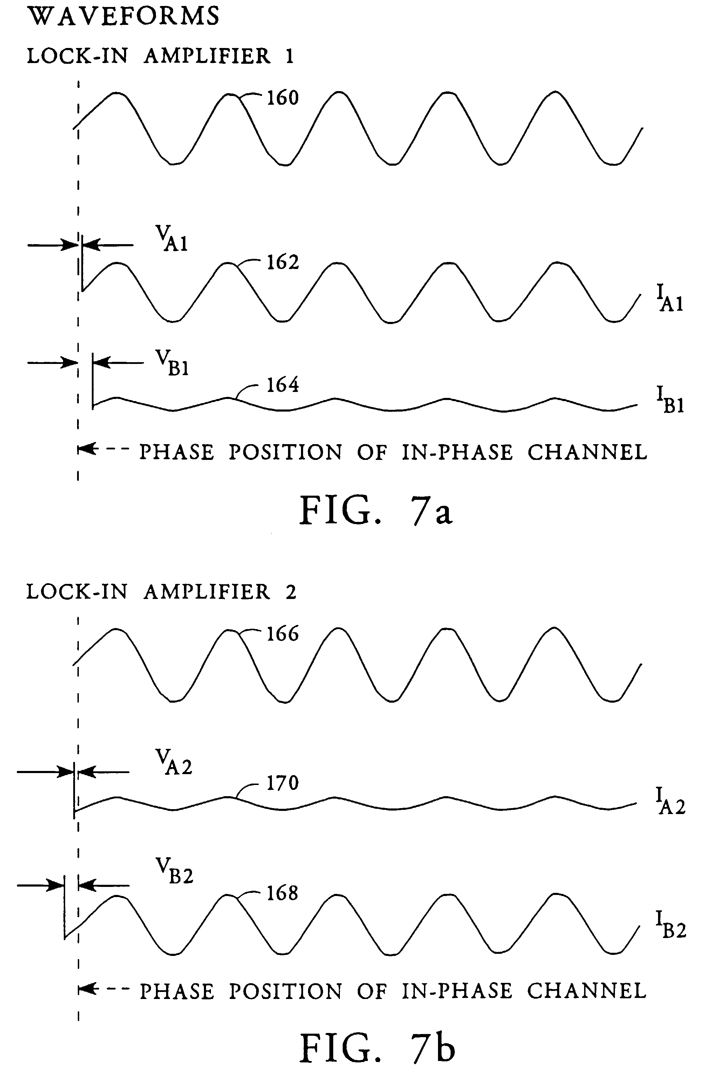

Referring now to Figs. 7a-b, the phase relationship between waveforms of the modulated excitation beams and the corresponding emitted fluorescence is shown. The intensity modulation of the beam having excitation wavelength $\lambda_1$ is represented by a sinusoidal waveform 160. Fluorophore A responds to $\lambda_1$ with a sinusoidally modulated fluorescent main signal 162. Fluorophore B also responds to $\lambda_1$ with a smaller modulated fluorescent cross-excited signal 164. The frequencies of excitation signal 160 and fluorescent signals 162 and 164 are the same and will be captured by lock-in amplifier 30 which is synchronized with the modulation frequency $\nu_1$ of $\lambda_1$. The phase of the emitted fluorescence waveform, however, will differ from that of the excitation waveform. The phase relationship between the emitted fluorescence waveform and the excitation waveform is dependent upon the fluorescent relaxation time of the individual fluorophores and on the modulation frequency. Lock-in amplifier 32 is synchronized with the modulation frequency $\nu_2$ of $\lambda_2$. Fluorophore B, which is predominantly excited by $\lambda_2$, emits a modulated fluorescent main signal 168 while fluorophore A emits a smaller modulated fluorescent cross-excited signal 170. Fluorescent signals 168 and 170 have the same frequency as excitation 166 and are captured by lock-in amplifier 32. The phases of the emitted fluorescent signals 168 and 170 however will differ from the phase of excitation 166.

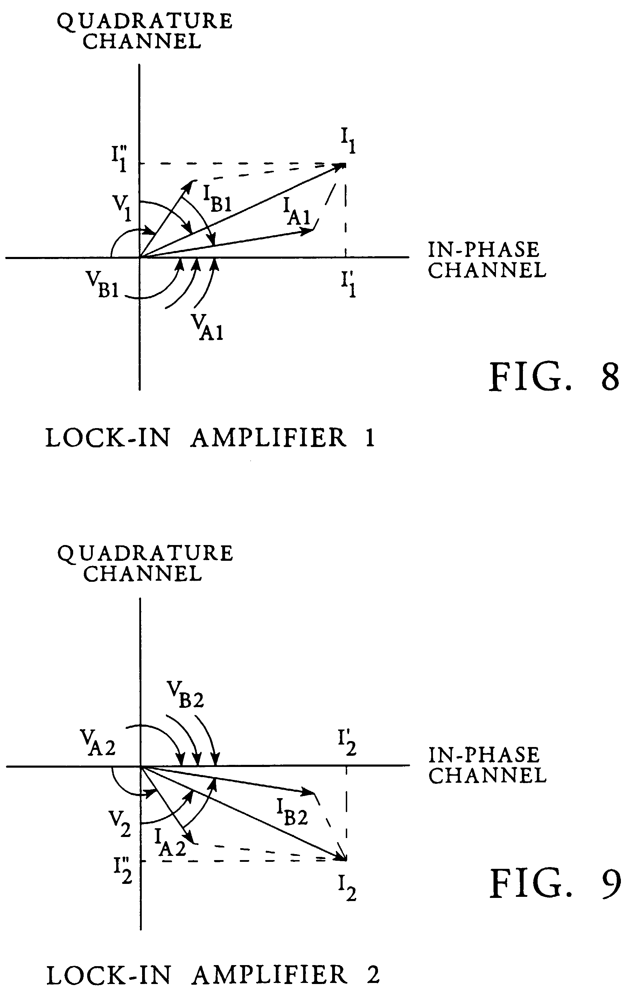

Referring now to Figs. 8 and 9, the vector components and phase angles of the in-phase and quadrature channels of lock-in amplifiers 30 and 32, respectively, are shown. For amplifier 30 the output of the in-phase channel is represented by the quantity $I_1'$ and the output of the quadrature channel is represented by the quantity $I_1''$. The input to amplifier 30 is represented by a vector of amplitude $I_1$ at a phase angle $V_1$ to the in-phase channel. This is composed of the vector sum of the signals corresponding to each fluorophore represented by $I_{A1}$ at an angle $V_{A1}$ for fluorophore A and $I_{B1}$ at angle $V_{B1}$ for fluorophore B. Similar notation is used in Fig. 9 with the subscript 2 replacing the subscript 1 for the components of lock-in amplifier 32. The following equations are used in computer 34 to resolve the outputs of amplifiers 30 and 32 into the component vectors for fluorophores A and B:

$$
\begin{aligned}
I_1' &= I_1 \cos V_1 = I_{A1} \cos V_{A1} + I_{B1} \cos V_{B1} \\
I_2' &= I_2 \cos V_2 = I_{A2} \cos V_{A2} + I_{B2} \cos V_{B2} \qquad (E1) \\
I_1'' &= I_1 \sin V_1 = I_{A1} \sin V_{A1} + I_{B1} \sin V_{B1} \\
I_2'' &= I_2 \sin V_2 = I_{A2} \sin V_{A2} + I_{B2} \sin V_{B2}
\end{aligned}
$$

The phase position of the in-phase channel is tuned to be close to the position that gives a maximum value for the output from the predominantly excited fluorophore. Lock-in amplifier 30 is thus tuned to detect signals from fluorophore A predominantly while lock-in amplifier 32 is tuned to detect signals from fluorophore B predominantly.

In order to determine angles $V_{A1}$ and $V_{A2}$ it is necessary to collect data from a region where fluorophore A is present and fluorophore B is not. In these regions:

$$
\tan V_{A1} = \frac{I_1''}{I_1'}
$$

$$
\tan V_{A2} = \frac{I_2''}{I_2'}
$$

These regions may be determined by direct observation or by searching the data set corresponding to the locations throughout specimen 26 which are digitally stored in computer 34 in a location specific manner. Regions where fluorophore A is present and fluorophore B is not may be identified by the fact that $I_2'/I_1'$ is minimized in these regions.

$V_{B1}$ and $V_{B2}$ may be determined in similar fashion from regions where fluorophore B is present and fluorophore A is not. In those regions:

$$
\tan V_{B1} = \frac{I_1''}{I_1'}
$$

$$
\tan V_{B2} = \frac{I_2''}{I_2'}
$$

Regions in the data set where fluorophore B is present and fluorophore A is not are characterized by the fact that $I_1'/I_2'$ is minimized.

Having determined values for $V_{A1}$, $V_{B1}$, $V_{B2}$ and $V_{A2}$, computer 34 is able to solve the four simultaneous equations (EI) having four unknowns, $I_{A1}$, $I_{A2}$, $I_{B1}$ and $I_{B2}$, using conventional numerical techniques. In the preferred embodiments, the derived quantities, $I_{A1}$, $I_{A2}$, $I_{B1}$ and $I_{B2}$, representing the individual components of combined emission spectrum 140 are digitally stored in the memory of computer 34 for each location scanned in specimen 26. The data may be output by computer 34 as displayed images 172, 174, 176 and 178, shown in Fig. 5, corresponding to components $I_{A1}$, $I_{B2}$, $I_{A2}$ and $I_{B1}$, respectively, or used for further processing.

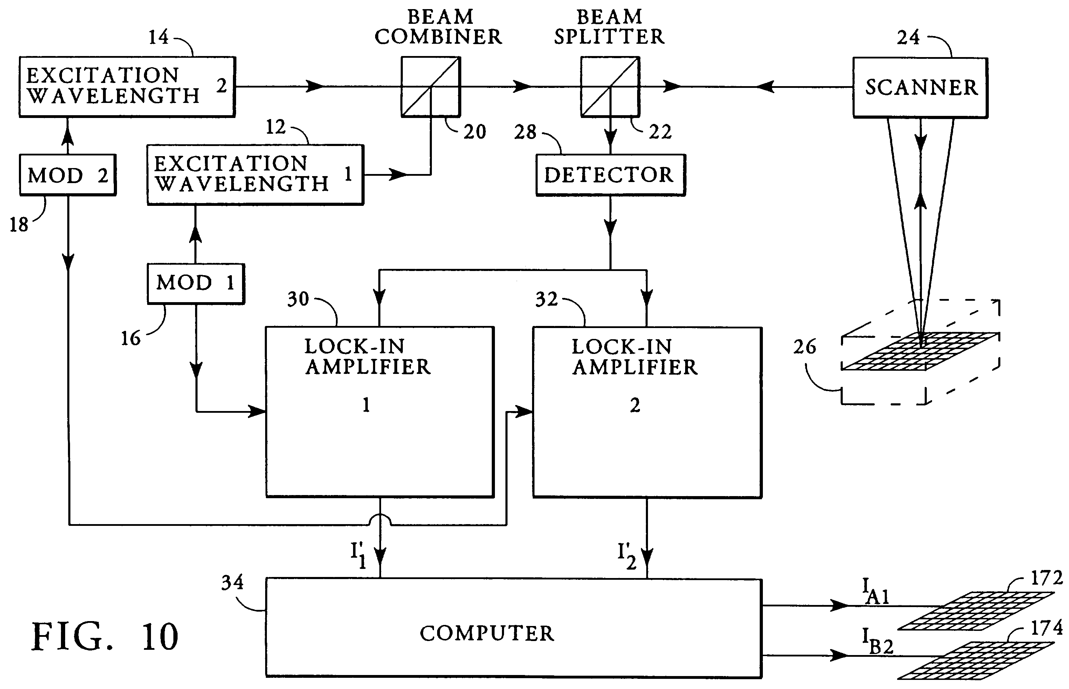

Referring now to Fig. 10, a schematic block diagram of a variation of the second embodiment of the invention, employing single phase lock-in amplifiers, is shown. When specimen 26 contains two fluorophores which have different relaxation times, the waveforms corresponding to the fluorescent excitation generated by the fluorophores will differ in phase. The phase position of lock-in amplifier 30, which picks up emission predominantly from fluorophore A, is tuned to the position which cancels out the contribution from the waveform generated by fluorophore B. The phase position of lock-in amplifier 32, which picks up emission predominantly from fluorophore B, is tuned to the position that cancels out the contribution from the waveform generated by fluorophore A. Regions where one fluorophore is present and the other is not are determined by direct observation.

In a variation of the second embodiment of this invention, employing single phase lock-in amplifiers, an underlying assumption is that for each fluorophore the cross-excited emission is proportional to the main emission. No such assumption is necessary, however, in the variations depicted in the first embodiment of the invention. Lock-in amplifiers 30 and 32 are tuned to the positions which give maximum output from the predominantly excited fluorophore. The factor of proportion of the cross-excited contribution to the main contribution is obtained from regions where a single fluorophore only is present. Such regions can be determined by scanning the data set for minimum values of the quotients $I_2/I_1$ and $I_1/I_2$, In cases where the fluorophores A and B have different relaxation times, computer 34 is only able to derive the quantities $I_{A1}$ and $I_{B2}$, representing individual components of combined emission spectrum 140. The data may be output by computer 34 as displayed image 172 for $I_{A1}$ from fluorophore A and 174 for $I_{B2}$ from fluorophore B.

In the examples given in Figs. 2, the fluorophores used were TRITC and Lucifer Yellow, at 514 and 458 nm, respectively. These fluorophores were modulated at 0.7 MHz and 0.9 MHz, respectively, using two argon-ion lasers of about 1 watt output power each. The pixel sampling rate was 100 KHz.

The ability of the present invention to quantify multiple fluorophores simultaneously may be utilized in a variety of applications. These include the quantitative analysis of fluorescently labeled compounds which have been electrophoretically separated, such as the individual bases in a DNA sequencing. Additionally, the kinetics of reactions involving fluorescently labeled compounds in intact cells may be followed. For example, regions where the fluorescent relaxation times take specific values may be extracted from recorded images. This would open a completely new way to analyze and quantify microscopic structures in three dimensions.

## Claims

1. A device for quantifying fluorescent targets by excitation with electromagnetic radiation of multiple discrete wavelengths comprising:

   means for directing dual beams of continuous electromagnetic radiation, each beam having a discrete wavelength, said beams impinging together in a scanning manner at a plurality of individual locations where fluorescent targets are present causing excitation thereof;

   means for modulating the intensity of each of said beams at separate modulation frequencies to give each of said beams a specific time-modulated waveform;

   means for detecting the combined fluorescent emission from said targets in response to said excitation; and demodulation means including at least two lock-in amplifiers, each amplifier associated with a different modulation frequency, for extracting the contributions corresponding to each of said targets from said detected combined fluorescent emission, thereby quantifying said targets.

2. The device of claim 1 wherein said means for detecting the combined fluorescent emission from said targets comprises dual detectors.

3. The device of claim 1 wherein said means for detecting the combined fluorescent emission from said targets comprises a single detector.

4. A device for quantifying fluorescent targets, spatially distributed in a plane, by excitation with electromagnetic radiation of multiple discrete wavelengths comprising,

   means for directing dual beams of electromagnetic radiation having different discrete wavelengths at a plurality of individual locations in a scanning manner on a plane where fluorescent targets are present, causing excitation of the targets;

   means for modulating each of said beams at separate modulation frequencies to give each of said beams a specific time-modulated waveform;

   means for collecting radiation emitted at locations in said plane in response to said excitation;

   means for optically separating spectral parts of said emitted radiation, said spectral parts representing at least two different wavelength bands;

means for independently detecting radiation representing each of said separated spectral parts of said emitted radiation;

demodulation means including at least two lock-in amplifiers, each amplifier associated with a different modulation frequency, for extracting from each of said detected spectral parts of the combined emitted radiation from multiple fluorescent targets the contributions corresponding to each of said targets, thereby quantifying each target in said plane.

5. The device of claim 4 wherein each of said beams is produced by a separate diode laser, each of said diode lasers being modulated in intensity with a separate frequency.

6. The device of claim 4 wherein said means for modulating each of said beams comprises an electro-optical modulator for each beam, each of the beams modulated at a separate frequency.

7. The device of claim 4 wherein said means for modulating each of said beams comprises an acousto-optical modulator for each beam, each of the beams modulated at a separate frequency.

8. The device of claim 4 wherein said means for independently detecting spectral parts of said combined emission comprises dual detectors and said means for optically separating spectral parts comprises optical filters arranged to distribute spectrally separated parts of said combined fluorescent emission to each of said dual detectors.

9. The device of claim 8 wherein said demodulation means include separate demodulation means for each of said dual detectors, said demodulation means being specific for signals having the same frequencies as the modulation frequency of a corresponding beam, and the output of each demodulation means being specific to a particular phase position of the modulated waveform.

10. The device of claim 9 wherein said demodulation means includes a single-phase lock-in amplifier for each of the dual detectors, said amplifier being synchronized with the modulation frequency of the corresponding beam.

11. The device of claim 10 wherein the phase position of each of said single-phase amplifiers is tuned to the position which maximizes the output of said amplifier from a corresponding fluorescent target.

12. The device of claim 9 wherein said demodulation means include two single-phase lock-in amplifiers for each of said dual detectors, one being synchronized with the modulation frequency of one of said exciting beams, the other with the modulation frequency of the other, whereby cross-excited spectra are simultaneously and independently measured.

13. The device of claim 9 wherein said demodulation means includes a dual-phase lock-in amplifier for each of said dual detectors, whereby phase shifts of two fluorescent targets are simultaneously and independently measured.

14. The device of claim 4 wherein said means for collecting radiation emitted at locations in said plane is a confocal microscope.

15. A device for quantifying fluorescent targets, spatially distributed in a volume, by excitation with electromagnetic radiation of multiple discrete wavelengths comprising,

means for directing dual beams of electromagnetic radiation having different discrete wavelengths at a plurality of individual locations in a scanning manner on a scan plane of a volumetric sample, where one or more fluorescent targets are present, causing excitation of the target;

means for modulating each of said beams at separate modulation frequencies to give each of said beams a specific time-modulated waveform;

confocal means for collecting radiation emitted at locations in the scan plane in response to said excitation;

means for optically separating spectral parts of said emitted radiation, said spectral parts representing at least two different wavelength bands;

means for independently detecting radiation representing each of said separated spectral parts of said emitted radiation;

demodulation means including at least two lock-in amplifiers, each amplifier associated with a different modulation frequency, for extracting from each of said detected spectral parts of the combined emitted radiation from multiple fluorescent targets the contributions corresponding to each of said targets, thereby quantifying each target on the scan plane;
means for changing the scan plane to another scan plane of the volumetric sample; and
means for storing data for a plurality of scan planes representing quantification of fluorescent targets in a volumetric sample.

16. The device of claim 15 wherein each of said beams is produced by a separate diode laser, each of said diode lasers being modulated with a separate frequency.

17. The device of claim 15 wherein said means for modulating each of said beams comprises an electro-optical modulator for each beam.

18. The device of claim 15 wherein said means for modulating each of said beams comprises an acousto-optical modulator for each beam.

19. The device of claim 15 wherein said means for independently detecting spectral parts of said combined emission comprises dual detectors and said means for optically separating spectral parts comprises optical filters arranged to distribute spectrally separated parts of said combined fluorescent emission to each of said dual detectors.

20. The device of claim 19 wherein said demodulation means include separate demodulation means for each of said dual detectors, said demodulation means being specific for signals having the same frequencies as the modulation frequency of a corresponding beam, and the output of each demodulation means being specific to a particular phase position of the modulated waveform.

21. The device of claim 20 wherein said demodulation means includes a single-phase lock-in amplifier for each of the dual detectors, said amplifier being synchronized with the modulation frequency of the corresponding beam.

22. The device of claim 21 wherein the phase position of each of said single-phase amplifiers is tuned to the position which maximizes the output of said amplifier from a corresponding fluorescent target.

23. The device of claim 20 wherein said demodulation means include two single-phase lock-in amplifiers for each of said dual detectors, one being synchronized with the modulation frequency of one of said exciting beams, the other with the modulation frequency of the other, whereby cross-excited spectra are simultaneously and independently measured.

24. The device of claim 20 wherein said demodulation means includes a dual-phase lock-in amplifier for each of said dual detectors, whereby phase shifts of two fluorescent targets are simultaneously and independently measured.

**Patentansprüche**

1. Eine Vorrichtung zum quantitativen Erfassen von fluoreszierenden Meßobjekten durch Anregung mit elektromagnetischer Strahlung mit mehreren, diskreten Wellenlängen, die aufweist:

ein Mittel zum Führen von zwei Strahlen mit kontinuierlicher, elektromagnetischer Strahlung, wobei jeder Strahl eine diskrete Wellenlänge aufweist und wobei die Strahlen zusammen auf eine abtastende Weise auf eine Vielzahl von einzelnen Stellen auftreffen, an denen fluoreszierende Meßobjekte vorhanden sind, auftreffen und deren Anregung bewirken;
ein Mittel zum Modulieren der Intensität jedes Strahls mit verschiedenen Modulationsfrequenzen, um jedem Strahl eine spezielle, zeitmodulierte Wellenform aufzuprägen;
ein Mittel zum Erfassen der zusammengesetzten Fluoreszenzemission von den Meßobjekten als Reaktion auf die Anregung; und
ein Demodulationsmittel, das mindestens zwei Lock-in-Verstärker aufweist, wobei jeder Verstärker einer anderen Modulationsfrequenz zugeordnet ist, um die Beiträge, die jeweils mit den Meßobjekten korrespondieren, aus der erfaßten, zusammengesetzten Fluoreszenzemission zu extrahieren, wodurch die Meßobjekte quantitativ erfaßt werden.

2. Die Vorrichtung nach Anspruch 1, bei der das Mittel zum Erfassen der zusammengesetzten Fluoreszenzemission von den Meßobjekten zwei Detektoren aufweist.

**3.** Die Vorrichtung nach Anspruch 1, bei der das Mittel zum Erfassen der zusammengesetzten Fluoreszenzemission von den Meßobjekten einen einzigen Detektor aufweist.

**4.** Eine Vorrichtung zum quantitativen Erfassen von fluoreszierenden Meßobjekten, die räumlich in einer Ebene verteilt sind, durch Anregung mit elektromagnetischer Strahlung mit mehreren, diskreten Wellenlängen, wobei die Vorrichtung aufweist,

ein Mittel zum Führen von zwei Strahlen von elektromagnetischer Strahlung mit verschiedenen, diskreten Wellenlängen zu einer Vielzahl von einzelnen Stellen in einer Ebene, wo fluoreszierende Meßobjekte vorhanden sind, auf eine abtastende Weise, wobei die Anregung der Meßobjekte bewirkt wird;
ein Mittel zum Modulieren jedes Strahls mit verschiedenen Modulationsfrequenzen, um jedem der Strahlen eine spezielle, zeitmodulierte Wellenform aufzuprägen;
ein Mittel zum Sammeln von Strahlung, die von Stellen in der Ebene als Reaktion auf die Anregung ausgestrahlt wird;
ein Mittel zum optischen Trennen von spektralen Anteilen der emittierten Strahlung, wobei die spektralen Anteile mindestens zwei verschiedene Wellenlängenbänder darstellen;
ein Mittel zum unabhängigen Erfassen von Strahlung, die jeden der getrennten, spektralen Anteile der emittierten Strahlung darstellt;
ein Demodulationsmittel, das mindestens zwei Lock-in-Verstärker einschließt, wobei jeder Verstärker einer anderen Modulationsfrequenz zugeordnet ist, um aus jedem der erfaßten, spektralen Anteile der zusammengesetzten, emittierten Strahlung von mehreren fluoreszierenden Meßobjekten die Beiträge zu extrahieren, die jedem der Meßobjekte entsprechen, wodurch jedes Meßobjekt in der Ebene quantitativ erfaßt wird.

**5.** Die Vorrichtung nach Anspruch 4, bei der jeder der Strahlen durch einen einzelnen Diodenlaser erzeugt wird, wobei die Intensität jedes Diodenlasers mit einer separaten Frequenz moduliert wird.

**6.** Die Vorrichtung nach Anspruch 4, bei der das Mittel zum Modulieren jedes Strahls einen elektrooptischen Modulator für jeden Strahl aufweist, wobei jeder Strahl mit einer separaten Frequenz moduliert wird.

**7.** Die Vorrichtung nach Anspruch 4, bei der das Mittel zum Modulieren jedes Strahls einen akustooptischen Modulator für jeden Strahl aufweist, wobei jeder Strahl mit einer separaten Frequenz moduliert wird.

**8.** Die Vorrichtung nach Anspruch 4, bei der das Mittel zum unabhängigen Erfassen von spektralen Anteilen der zusammengesetzten Emission zwei Detektoren aufweist und bei der das Mittel zum optischen Trennen von spektralen Anteilen optische Filter aufweist, die so angeordnet sind, daß sie die spektral getrennten Anteile der zusammengesetzten Fluoreszenzemission zu jedem der beiden Detektoren aufteilen.

**9.** Die Vorrichtung nach Anspruch 8, bei der das Demodulationsmittel separate Demodulationsmittel für jeden der beiden Detektoren aufweist, wobei die Demodulationsmittel für Signale wirksam sind, die die gleichen Frequenzen wie die Modulationsfrequenz eines entsprechenden Strahls aufweisen, und wobei das Ausgangssignal eines jeden Demodulationsmittels für eine spezielle Phasenposition der modulierten Wellenform spezifisch ist.

**10.** Die Vorrichtung nach Anspruch 9, bei der das Demodulationsmittel einen Einphasen-Lock-in-Verstärker für jeden der beiden Detektoren einschließt, wobei die Verstärker mit der Modulationsfrequenz des entsprechenden Strahls synchronisiert sind.

**11.** Die Vorrichtung nach Anspruch 10, bei der die Phasenposition jedes Einphasen-Verstärkers auf die Position abgestimmt ist, die das Ausgangssignal des Verstärkers für ein entsprechendes, fluoreszierendes Meßobjekt maximiert.

**12.** Die Vorrichtung nach Anspruch 9, bei der das Demodulationsmittel zwei Einphasen-Lock-in-Verstärker für jeden der beiden Detektoren einschließt, wobei einer mit der Modulationsfrequenz einer der anregenden Strahlen synchronisiert ist und der andere mit der Modulationsfrequenz des anderen, wodurch überlagernd angeregte Spektren gleichzeitig und unabhängig gemessen werden.

**13.** Die Vorrichtung nach Anspruch 9, bei der das Demodulationsmittel einen Zweiphasen-Lock-in-Verstärker für jeden der zwei Detektoren einschließt, wodurch die Phasenverschiebungen der beiden fluoreszierenden Meßobjekte gleichzeitig und unabhängig gemessen werden.

**14.** Die Vorrichtung nach Anspruch 4, bei der das Mittel zum Sammeln von Strahlung, die an Stellen in der Ebene ausgestrahlt wird, ein konfokales Mikroskop ist.

**15.** Eine Vorrichtung zum quantitativen Erfassen von fluoreszierenden Meßobjekten, die in einem Volumen räumlich verteilt sind, durch Anregung mit elektromagnetischer Strahlung mit mehreren, diskreten Wellenlängen, wobei die Vorrichtung aufweist,

ein Mittel zum Führen von zwei Strahlen von elektromagnetischer Strahlung mit verschiedenen, diskreten Wellenlängen zu einer Vielzahl von einzelnen Stellen auf eine abtastende Weise in einer Abtastebene einer volumetrischen Probe, wo ein oder mehrere fluoreszierende Meßobjekte vorhanden sind, wodurch eine Anregung des Meßobjekts bewirkt wird;
ein Mittel zum Modulieren jedes Strahls mit verschiedenen Modulationsfrequenzen, um jedem Strahl eine spezifische, zeitmodulierte Wellenform aufzuprägen;
ein konfokales Mittel zum Sammeln von Strahlung, die als Reaktion auf die Anregung an Stellen in der Abtastebene emittiert wird;
ein Mittel zum optischen Trennen von spektralen Anteilen der emittierten Strahlung, wobei die spektralen Anteile mindestens zwei verschiedene Wellenlängenbänder darstellen;
ein Mittel zum unabhängigen Erfassen von Strahlung, die jeden der getrennten, spektralen Anteile der emittierten Strahlung darstellt;
ein Demodulationsmittel, das mindestens zwei Lock-in-Verstärker einschließt, wobei jeder Verstärker einer anderen Modulationsfrequenz zugeordnet ist, um die Beiträge, die jedem der Meßobjekte entsprechen, aus den erfaßten, spektralen Anteilen der zusammengesetzten, emittierten Strahlung von mehreren fluoreszierenden Meßobjekten zu extrahieren, wodurch jedes Meßobjekt auf der Abtastebene quantitativ erfaßt wird;
ein Mittel zum Wechseln von einer Abtastebene der volumetrischen Probe zu einer anderen Abtastebene; und
ein Mittel zum Speichern von Daten für eine Vielzahl von Abtastebenen, die die Quantifizierung der fluoreszierenden Meßobjekte in einer volumetrischen Probe darstellen.

**16.** Die Vorrichtung nach Anspruch 15, bei der jeder der Strahlen durch einen separaten Diodenlaser erzeugt wird, wobei jeder Diodenlaser mit einer separaten Frequenz moduliert ist.

**17.** Die Vorrichtung nach Anspruch 15, bei der das Mittel zum Modulieren jedes Strahls einen elektrooptischen Modulator für jeden Strahl aufweist.

**18.** Die Vorrichtung nach Anspruch 15, bei der das Mittel zum Modulieren jedes Strahls einen akustooptischen Modulator für jeden Strahl aufweist.

**19.** Die Vorrichtung nach Anspruch 15, bei der das Mittel zum unabhängigen Erfassen von spektralen Anteilen der zusammengesetzten Emission zwei Detektoren aufweist und bei der das Mittel zum optischen Trennen von spektralen Anteilen optische Filter aufweist, die so angeordnet sind, daß spektral getrennte Anteile der zusammengesetzten Fluoreszenzemission zu jedem der zwei Detektoren aufgeteilt werden.

**20.** Die Vorrichtung nach Anspruch 19, bei der das Demodulationsmittel getrennte Demodulationsmittel für jeden der beiden Detektoren aufweist, wobei die Demodulationsmittel für Signale wirksam sind, die die gleiche Frequenzen wie die Modulationsfrequenz eines entsprechenden Strahls aufweisen, und wobei das Ausgangssignal eines jeden Demodulationsmittels für eine bestimmte Phasenposition der modulierten Wellenform spezifisch ist.

**21.** Die Vorrichtung nach Anspruch 20, bei der das Demodulationsmittel einen Einphasen-Lock-in-Verstärker für jeden der beiden Detektoren aufweist, wobei die Verstärker mit der Modulationsfrequenz des entsprechenden Strahls synchronisiert sind.

**22.** Die Vorrichtung nach Anspruch 21, bei der die Phasenposition jedes der Einphasen-Verstärker auf die Position abgestimmt ist, die für ein entsprechendes, fluoreszierendes Meßobjekt das Ausgangssignal des Verstärkers maximiert.

**23.** Die Vorrichtung nach Anspruch 20, bei der das Demodulationsmittel zwei Einphasen-Lock-in-Verstärker für jeden der beiden Detektoren einschließt, wobei einer mit der Modulationsfrequenz eines der anregenden Strahlen synchronisiert ist und der andere mit der Modulationsfrequenz des anderen, wodurch überlagernd angeregte Spektren gleichzeitig und unabhängig gemessen werden.

**24.** Die Vorrichtung nach Anspruch 20, bei der das Demodulationsmittel einen Zweiphasen-Lock-in-Verstärker für jeden der beiden Detektoren einschließt, wodurch die Phasenverschiebungen von zwei fluoreszierenden Meßobjekten gleichzeitig und unabhängig gemessen werden.

**Revendications**

**1.** Dispositif pour quantifier des cibles fluorescentes par excitation au moyen d'une radiation électromagnétique présentant de multiples longueurs d'onde discrètes, comprenant :

des moyens pour diriger des rayons doubles de radiation électromagnétique continue, chaque rayon présentant une longueur d'onde discrète, cependant que lesdits rayons se rencontrent de manière à produire un balayage en une pluralité d'endroits individuels où des cibles fluorescentes sont présentes, en provoquant l'excitation de celles-ci ;
des moyens pour moduler l'intensité de chacun desdits rayons à des fréquences de modulation séparées pour donner à chacun desdits rayons une forme d'onde spécifique modulée dans le temps ;
des moyens pour détecter l'émission fluorescente combinée provenant desdites cibles en réponse à ladite excitation ; et :
des moyens de démodulation comprenant au moins deux amplificateurs de blocage, chaque amplificateur étant associé à une fréquence de modulation différente, pour extraire de ladite émission fluorescente combinée détectée les contributions qui correspondent à chacune desdites cibles, en quantifiant ainsi lesdites cibles.

**2.** Dispositif selon la revendication 1, dans lequel lesdits moyens pour détecter l'émission fluorescente combinée provenant desdites cibles comprennent des détecteurs doubles.

**3.** Dispositif selon la revendication 1, dans lequel lesdits moyens pour détecter l'émission fluorescente combinée provenant desdites cibles comprennent un détecteur unique.

**4.** Dispositif pour quantifier des cibles fluorescentes distribuées dans un plan de l'espace par excitation au moyen d'une radiation électromagnétique présentant de multiples longueurs d'onde discrètes, comprenant :

des moyens pour diriger des rayons doubles de radiation électromagnétique présentant des longueurs d'onde discrètes différentes vers une pluralité d'endroits individuels de manière à produire un balayage dans un plan où des cibles fluorescentes sont présentes, en provoquant l'excitation des cibles ;
des moyens pour moduler chacun desdits rayons à des fréquences de modulation séparées pour donner à chacun desdits rayons une forme d'onde spécifique modulée dans le temps ;
des moyens pour recueillir la radiation émise en des endroits dudit plan en réponse à ladite excitation ;
des moyens pour séparer optiquement des parties du spectre de ladite radiation émise, lesdites parties du spectre représentant au moins deux bandes de longueurs d'onde différentes ;
des moyens pour détecter indépendamment la radiation qui représente chacune desdites parties séparées du spectre de ladite radiation émise ;
des moyens de démodulation comprenant au moins deux amplificateurs de blocage, chaque amplificateur étant associé à une fréquence de modulation différente, pour extraire de chacune desdites parties détectées du spectre de la radiation combinée émise depuis des cibles fluorescentes multiples les contributions qui correspondent à chacune desdites cibles, en quantifiant ainsi chaque cible dans ledit plan.

**5.** Dispositif selon la revendication 4, dans lequel chacun desdits rayons est produit par une diode laser séparée, chacune desdites diodes laser étant modulée en intensité à une fréquence séparée.

**6.** Dispositif selon la revendication 4, dans lequel lesdits moyens pour moduler chacun desdits rayons comprennent un modulateur optoélectrique pour chaque rayon, chacun des rayons étant modulé à une fréquence séparée.

**7.** Dispositif selon la revendication 4, dans lequel lesdits moyens pour moduler chacun desdits rayons comprennent un modulateur optoacoustique pour chaque rayon, chacun des rayons étant modulé à une fréquence séparée.

**8.** Dispositif selon la revendication 4, dans lequel lesdits moyens pour détecter indépendamment des parties du spectre de ladite émission combinée comprennent des détecteurs doubles, et lesdits moyens pour séparer optiquement des parties du spectre comprennent des filtres optiques susceptibles de distribuer à chacun desdits détecteurs doubles des parties de spectre séparées de ladite émission fluorescente combinée.

9. Dispositif selon la revendication 8, dans lequel lesdits moyens de démodulation comprennent des moyens de démodulation séparés pour chacun desdits détecteurs doubles, lesdits moyens de démodulation étant propres à des signaux présentant les mêmes fréquences que la fréquence de modulation d'un rayon correspondant, et le signal de sortie de chaque moyen de démodulation étant propre à une position particulière de la phase de la forme d'onde modulée.

10. Dispositif selon la revendication 9, dans lequel lesdits moyens de démodulation comprennent un amplificateur de blocage à phase unique pour chacun des détecteurs doubles, ledit amplificateur étant synchronisé avec la fréquence de modulation du rayon correspondant.

11. Dispositif selon la revendication 10, dans lequel la position de la phase de chacun desdits amplificateurs à phase unique est accordée sur la position qui rend maximal le signal de sortie dudit amplificateur provenant d'une cible fluorescente correspondante.

12. Dispositif selon la revendication 9, dans lequel lesdits moyens de démodulation comprennent deux amplificateurs de blocage à phase unique pour chacun desdits détecteurs doubles, l'un étant synchronisé avec la fréquence de modulation de l'un desdits rayons d'excitation et l'autre l'étant avec la fréquence de modulation de l'autre, des spectres à excitation croisée étant mesurés simultanément et indépendamment.

13. Dispositif selon la revendication 9, dans lequel lesdits moyens de démodulation comprennent un amplificateur de blocage à phase double pour chacun desdits détecteurs doubles, des déphasages de deux cibles fluorescentes étant mesurés simultanément et indépendamment.

14. Dispositif selon la revendication 4, dans lequel lesdits moyens pour recueillir la radiation émise en des endroits dudit plan est un microscope à foyer commun.

15. Dispositif pour quantifier des cibles fluorescentes distribuées dans un volume de l'espace par excitation au moyen d'une radiation électromagnétique présentant de multiples longueurs d'onde discrètes, comprenant :

des moyens pour diriger des rayons doubles de radiation électromagnétique présentant des longueurs d'onde discrètes différentes vers une pluralité d'endroits individuels de manière à produire un balayage sur un plan de balayage d'un échantillon volumique où une ou plusieurs cibles fluorescentes sont présentes, en provoquant l'excitation de la cible ;
des moyens pour moduler chacun desdits rayons à des fréquences de modulation séparées pour donner à chacun desdits rayons une forme d'onde spécifique modulée dans le temps ;
des moyens à foyer commun pour recueillir la radiation émise en des endroits du plan de balayage en réponse à ladite excitation ;
des moyens pour séparer optiquement des parties du spectre de ladite radiation émise, lesdites parties du spectre représentant au moins deux bandes de longueurs d'onde différentes ;
des moyens pour détecter indépendamment la radiation qui représente chacune desdites parties séparées du spectre de ladite radiation émise ;
des moyens de démodulation comprenant au moins deux amplificateurs de blocage, chaque amplificateur étant associé à une fréquence de modulation différente, pour extraire de chacune desdites parties détectées du spectre de la radiation combinée émise depuis des cibles fluorescentes multiples les contributions qui correspondent à chacune desdites cibles, en quantifiant ainsi chaque cible sur le plan de balayage ;
des moyens pour remplacer le plan de balayage par un autre plan de balayage de l'échantillon volumique ; et :
des moyens pour mettre en mémoire des données pour une pluralité de plans de balayage représentant la quantification de cibles fluorescentes dans un échantillon volumique.

16. Dispositif selon la revendication 15, dans lequel chacun desdits rayons est produit par une diode laser séparée, chacune desdites diodes laser étant modulée à une fréquence séparée.

17. Dispositif selon la revendication 15, dans lequel lesdits moyens pour moduler chacun desdits rayons comprennent un modulateur optoélectrique pour chaque rayon.

18. Dispositif selon la revendication 15, dans lequel lesdits moyens pour moduler chacun desdits rayons comprennent un modulateur optoacoustique pour chaque rayon.

19. Dispositif selon la revendication 15, dans lequel lesdits moyens pour détecter indépendamment des parties du spectre de ladite émission combinée comprennent des détecteurs doubles, et lesdits moyens pour séparer optiquement les parties du spectre comprennent des filtres optiques susceptibles de distribuer à chacun desdits détecteurs doubles des parties de spectre séparées de ladite émission fluorescente combinée.

20. Dispositif selon la revendication 19, dans lequel lesdits moyens de démodulation comprennent des moyens de démodulation séparés pour chacun desdits détecteurs doubles, lesdits moyens de démodulation étant propres à des signaux présentant les mêmes fréquences que la fréquence de modulation d'un rayon correspondant, et le signal de sortie de chaque moyen de démodulation étant propre à une position particulière de la phase de la forme d'onde modulée.

21. Dispositif selon la revendication 20, dans lequel lesdits moyens de démodulation comprennent un amplificateur de blocage à phase unique pour chacun des détecteurs doubles, ledit amplificateur étant synchronisé avec la fréquence de modulation du rayon correspondant.

22. Dispositif selon la revendication 21, dans lequel la position de la phase de chacun desdits amplificateurs à phase unique est accordée sur la position qui rend maximal le signal de sortie dudit amplificateur provenant d'une cible fluorescente correspondante.

23. Dispositif selon la revendication 20, dans lequel lesdits moyens de démodulation comprennent deux amplificateurs de blocage à phase unique pour chacun desdits détecteurs doubles, l'un étant synchronisé avec la fréquence de modulation de l'un desdits rayons d'excitation et l'autre l'étant avec la fréquence de modulation de l'autre, des spectres à excitation croisée étant mesurés simultanément et indépendamment.

24. Dispositif selon la revendication 20, dans lequel lesdits moyens de démodulation comprennent un amplificateur de blocage à phase double pour chacun desdits détecteurs doubles, des déphasages de deux cibles fluorescentes étant mesurés simultanément et indépendamment.

FIG. 1

FIG. 2a

FIG. 2b

FIG. 2c

FIG. 2d

FIG. 3

FIG. 4

EP 0 681 695 B1

FIG. 5

EP 0 681 695 B1

FIG. 6a

FIG. 6b

FIG. 6c

FIG. 6d

## WAVEFORMS
### LOCK-IN AMPLIFIER 1

PHASE POSITION OF IN-PHASE CHANNEL

# FIG. 7a

### LOCK-IN AMPLIFIER 2

PHASE POSITION OF IN-PHASE CHANNEL

# FIG. 7b

23

QUADRATURE
CHANNEL

$I_1''$

$V_1$

$I_{B1}$

$I_1$

$I_{A1}$

IN-PHASE
CHANNEL

$V_{B1}$

$I_1'$

$V_{A1}$

FIG. 8

LOCK-IN AMPLIFIER 1

QUADRATURE
CHANNEL

$V_{B2}$

$V_{A2}$

$I_2'$

IN-PHASE
CHANNEL

$V_2$

$I_{B2}$

$I_{A2}$

$I_2''$

$I_2$

FIG. 9

LOCK-IN AMPLIFIER 2

FIG. 10